Europäisches Patentamt

European Patent Office

Office européen des brevets

(19)

(11) Publication number: **0 085 625**
**A2**

# (12) EUROPEAN PATENT APPLICATION

(21) Application number: **83400201.6**

(22) Date of filing: **28.01.83**

(51) Int. Cl.³: **H 04 B 12/04**

(30) Priority: **29.01.82 US 344088**

(43) Date of publication of application:
**10.08.83 Bulletin 83/32**

(84) Designated Contracting States:
**DE FR GB IT NL**

(71) Applicant: **FAIRCHILD CAMERA & INSTRUMENT CORPORATION**
**464 Ellis Street**
**Mountain View California 94042(US)**

(72) Inventor: **Lake, Don W.**
**21582 Columbus Avenue**
**Cupertino California 95014(US)**

(74) Representative: **Chareyron, Lucien et al,**
**Schlumberger Limited Service Brevets 42, rue**
**Saint-Dominique**
**F-75340 Paris Cedex 07(FR)**

(54) Filtering and frequency detection circuits for delta modulated signals.

(57) High and low pass filters and frequency detection circuitry responsive to the pulse train output of a linear delta modulator which generates a stream of positive and negative going output pulses, the average of which correspond to an analog input signal to said delta modulator. The filter circuits determine the slope of the output pulse average by counting the number of positive (1) and negative (0) going pulses during a predetermined interval and alters the sign of certain output pulses if the slope is higher than a predetermined slope value in the case of a low pass filter but lower than a predetermined value in the case of a high pass filter. The frequency detector circuitry employs an up/down counter to detect the zero crossover point of the output pulse waveform by sensing the point when the number one pulses exceed the number of zero pulses, or vice versa, and measures the time between those crossover points.

FIG. 5

# FILTERING AND FREQUENCY DETECTION CIRCUITS
## FOR DELTA MODULATED SIGNALS

TECHNICAL FIELD

This invention relates to waveform generation by digital techniques and in particular to circuitry for high and low pass filtering and frequency detection of such digitally developed waveforms.

BACKGROUND ART

Linear delta modulation is a simple and well-known method for the conversion of analog input signals into a series of binary pulses with all pulses having equal width and amplitude but phased so that the average amplitudes of the binary bit stream represent the analog input. For example, an analog input signal of constant amplitude would be represented by an alternately phased binary bit stream of 101010....0; a constant rapidly rising input amplitude by a non-alternately phased bit stream of 1111....1; and a rapidly constant decreasing amplitude by a non-alternately phased bit stream of 0000....0. Irregular input waveforms are similarly represented by binary combinations. For example, a section of a sine wave input may be converted into a binary bit stream having ten zeros and ten ones as follows: 1101101101 0100100100.

-2-

A much higher amplitude half sine wave may be also formed from the same ten ones and zeros but in a form such as: 1111111101000000000. Thus it can be seen that the slope of any small segment of a binary bit stream is determined by the number of binary ones and zeros in that section.

Linear delta modulation techniques may be employed for the generation of sinusoidal output frequencies such as used by Modem modulators. A pattern generator is preset to produce a binary output having a bit pattern for developing slope increments that will result in a quarter cycle of a sinusoidal waveform which, when inverted and mirror imaged by the circuitry, will generate a full cycle sine wave. Further, the use of slope data of segments in a bit stream generated from an analog input signal to a linear delta modulator circuit may be used directly to form a filtering function. Filtering circuitry operates by counting the number of ones and zeros in a given segment to thus determine the slope of that segment. The larger the slope for a given segment, the faster the rate of change of the signal, hence the higher the frequency. A high pass filter circuit therefore permits high slope values to pass unmodified through the circuitry but it modifies the mid and low slopes to even lower slope values. Conversely, a low pass filtering circuit will permit low slope values to pass but will reduce high slope values.

The output stream of the delta modulator also lends itself particularly well to zero crossing type of frequency detection. The continuous count of incoming bit streams will show a change from more ones to more zeros at a negative zero crossing, and a change from more zeros to more ones at a positive zero crossing. A count of clock pulses to achieve such a change provides an exact measure of one•half of a period.

DISCLOSURE OF THE INVENTION

Briefly described, according to the invention, a linear delta modulator comprises converting means and circuitry for high and low pass filtering and also for frequency detection. 'Filter circuitry employs a conventional up/down counter which, during one predetermined interval or segment of the converting means output pulse train, determines the output wave slope of that segment by a count of the zeros and the ones. The counter output is coupled to a pattern generator which modifies the pattern as required. In high pass filtering the pattern generator permits high slope values to pass unmodified but modifies mid and low slope values to an even lower value. Conversely, a low pass filter will pass low slope values and will reduce high values toward zero. Frequency detection is accomplished in a circuit including an up/down counter followed by a period counter that merely determines the number of clock pulses required for a change between more zeros to more ones, or vice versa, hence a crossover point.

BRIEF DESCRIPTION OF THE DRAWINGS

In the drawings which illustrate the operating principles, circuit embodiments, and response curves of the invention:

FIG. 1 is a circuit block diagram of a well•known prior art linear delta modulator;

FIG. 2 illustrates a sine wave together with typical slope segments formed by pulses generated by the modulator of FIG. 1;

FIG. 3 illustrates a circuit block diagram of a sinusoidal output generator employing delta modulator principles;

FIG. 4 is a curve of a portion of a sine wave formed by output pulse segments from the circuit of FIG. 3;

FIG. 5 illustrates a circuit block diagram of a high or low pass filter for a delta modulated output stream;

FIG. 6 illustrates curves of output characteristics of high pass filtering by the circuitry of FIG. 5;

FIG. 7 illustrates output characteristic curves of low pass filtering by the circuitry of FIG. 5; and

FIG. 8 illustrates a circuit block diagram of a zero crossover frequency detector.

BEST MODE FOR CARRYING OUT THE INVENTION

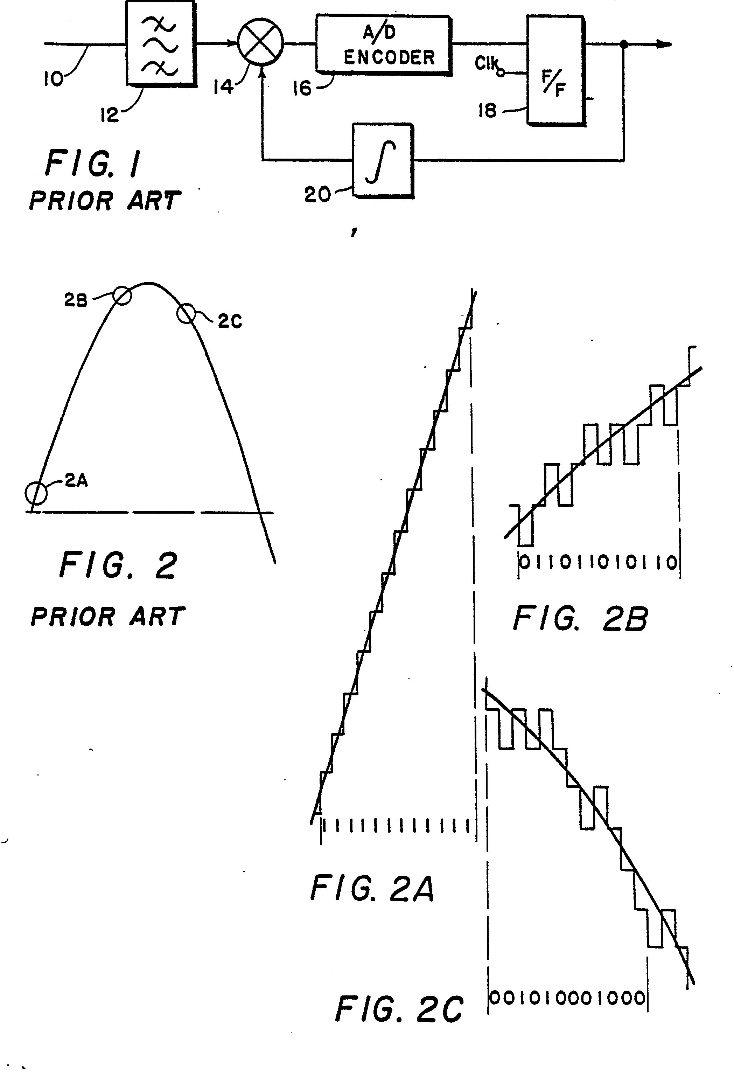

Linear delta modulation is a very simple and well-known technique for analog-to-digital conversion. An analog input signal applied to the input conductor 10 of FIG. 1 is applied through a suitable band pass filter 12 to one input of a differential circuit 14, the output of which is coupled to an analog-to-digital encoder 16. The output of encoder 16 is switched at a desired clock rate by a flip-flop 18 and the binary pulse output therefrom is decoded back into an analog form by integrator 20 in a feedback loop and is then subtracted from the filtered analog input signal by circuitry 14 to form an error signal which is quantized into one of two possible levels depending upon the polarity. The output of the quantizer is sampled periodically to produce the output binary pulses. The closed loop arrangement of the delta modulator ensures that the polarity of the pulses are adjusted by the sign of the error signal which causes the decoded waveform to track the input signal. Stated in another way, the delta modulator produces binary pulses at its output which represent the sign of the difference between the input signal and feedback signal, hence the prefix "delta". The modulation process is linear because the decoder, an integrator 20, is a linear network.

FIG. 2 illustrates a half sine wave which, when applied as an analog input signal to the circuitry of FIG. 1, is converted into a plurality of segments, each formed by a predetermined number of digital pulses which collectively form a slope of that segment. A small portion of the sine wave of FIG. 2 that is labeled FIG. 2A represents a maximum slope value and, as illustrated in the curve of FIG. 2A is a segment comprising twelve ones. FIG. 2B, representing a 12-digit segment near the 75° point on the sine wave of FIG. 2, necessarily has a lower positive slope value and, as shown in FIG. 2, may be comprised of a combination of seven ones and five zeros in form: 011011010110. A negative slope comprising three ones and nine zeros in the form 001010001000, will produce an average value which closely approximates the negative slope of the sine wave near its 120° point, as illustrated in FIG. 2C.

Thus, any binary pulse sequence in a segment of some predetermined length may be considered as a piecewise approximation of a portion of an analog signal. The amplitude difference between the initial and final states in a segment of pulses determines the net slope change for that segment and the relative locations of the ones and zeros in that segment have no effect on that net change. However, while the relative position of the ones and zeros are not critical in terms of end point to end point value, the position is critical for in-segment response. The ones and the zeros need to be distributed as uniformly as possible throughout the pattern to provide end-to-end linearity. Thus, the twelve-digit segment illustrated in FIG. 2B could be comprised of seven consecutive ones followed by five consecutive zeros and will produce a very rough one-step "curve" with beginning and end points identical to those in the curve of FIG. 2B. However, by proper distribution of the ones and zeros as shown in FIG. 2B, the end slopes are substantially identical with adjoining end slopes of adjacent segments and results in a smooth sine wave curve.

By appropriate sequence selection and storage of binary ones and zeros in each of a plurality of segments, any desired output waveform may be continuously generated such as the sinusoidal outputs generated by Modem modulators. Proper slope values may readily be determined by the sine or cosine values for each angle in one quarter cycle of the sinusoid and by mirror imaging or inverting the remaining quarter cycles the complete waveform may be developed.

-7-

An example for proper determination of slope values for each 10° segment in one-quarter of a sinusoidal waveform is as follows: Referring to the following table, each 10° angle between 0° and 90° is shown in the first column and the corresponding rounded cosine value (times 100) is indicated in the second column. The difference between consecutive cosine values is proportional to the net change in slope between ends of that 10° segment. If each 10° segment is arbitrarily selected to comprise a pulse stream of eighteen pulses, the net change may be plotted so that at the 10° angle of the sinusoid the net change of two may be represented by ten ones and eight zeros or a net slope value of two. Similarly the change of four units at the 20° angle may be represented by eleven ones and seven zeros. In order to obtain curve linearity at the ends of adjacent 10° segments, the "Bit Pattern" column in the following table suggests an appropriate bit distribution of ones and zeros.

| ANGLE | COSINE (x 100) | CHANGE OR SLOPE | 1s | 0s | BIT PATTERN |
|---|---|---|---|---|---|
| 0 | 100 | | | | |
| 10 | 98 | 2 | 10 | 8 | 101010101101010101 |
| 20 | 94 | 4 | 11 | 7 | 110101010111010101 |
| 30 | 86 | 8 | 13 | 5 | 110110111011011011 |
| 40 | 76 | 10 | 14 | 4 | 111011101101110111 |
| 50 | 64 | 12 | 15 | 3 | 111101111011101111 |
| 60 | 50 | 14 | 16 | 2 | 111110111111011111 |
| 70 | 34 | 16 | 17 | 1 | 111111111011111111 |
| 80 | 18 | 16 | 17 | 1 | 111111111011111111 |
| 90 | 0 | 18 | 18 | 0 | 111111111111111111 |

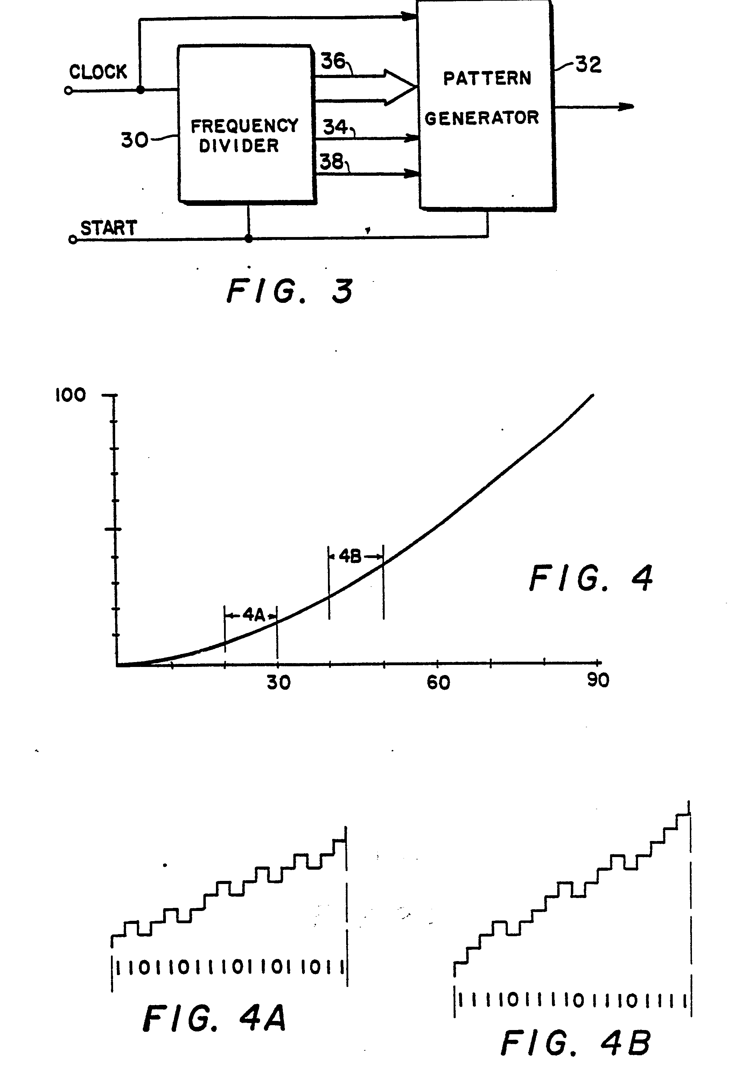

FIG. 3 illustrates a block diagram of a circuit that may be used to generate sinusoidal output bit streams according to the suggested bit pattern in the above table. As illustrated in FIG. 3, a clock signal is applied to a frequency divider 30 and also to a pattern generator 32 which contains a small read only memory containing the binary values for each of the eighteen bits in the nine segments. In the circuitry of FIG. 3 an input clock signal generates individual bits. The divider 30 divides the clock by "4" to represent the four quadrants of 90° each in a waveform and enters this clock frequency into generator 32 on the conductor 34 together with segment timing signals which are equal to eighteen bit lengths in the presently described embodiment. Quadrant positioning data may also be applied to the generator 32 on a conductor 38 by a signal representing the divided clock signal on conductor 34 which has been displaced in time by 90°.

FIG. 4 illustrates a quarter sine wave starting at the 270° point on the waveform or a quarter cosine wave starting at the 180° point and is a plot of the bit stream data in the above table and also a typical plot of the output of the circuitry of FIG. 3.

FIG. 4A is a greatly enlarged section of the curve of FIG. 4 and illustrates the binary bit pattern of the 18-bit segment between 20° and 30°. As shown in the above table there is an eighteen unit slope change between 20° and 30° and that the bit stream contains thirteen ones and five zeros, preferably in the bit pattern of 110110111011011011, as also shown in FIG. 4A. Similarly, FIG. 4B, which is an enlarged view of the 18-bit segment between 40° and 50° on the curve of FIG. 4, illustrates a greater slope of twelve units with fifteen ones and three zeros as shown in both the above table and in the figure.

The use of slope information, segment by segment, can also be used directly to form high pass and low pass filtering functions. In a high pass filter, the larger the slope of a given segment, the faster the rate of change of the signal, consequently the higher a frequency. High pass filtering therefore permits high slope values to pass unmodified but reduces mid-values and low slope values. Conversely, low pass filtering permits low slope values to pass unmodified but greatly reduces the high slope values toward zero.

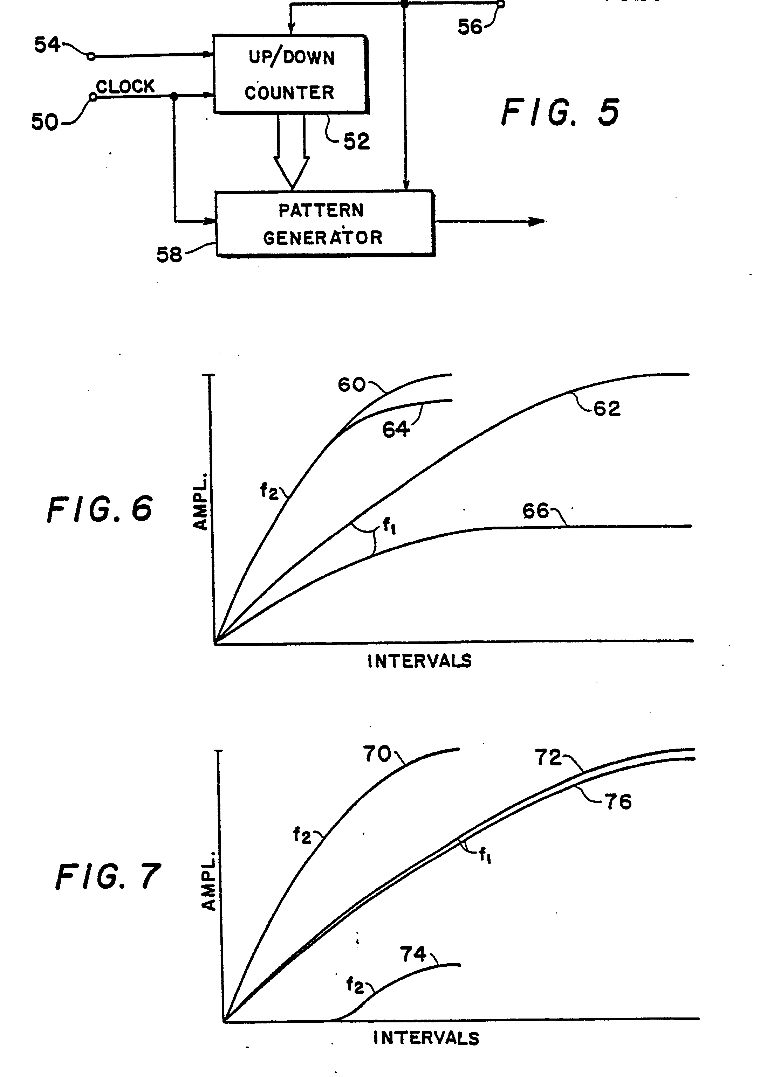

FIG. 5 illustrates a block diagram of circuitry that may be employed for either low pass or high pass filtering functions. A clock signal of a desired fixed frequency corresponding to the clock of the linear delta modulator enters the circuitry at terminal 50 and is applied to an up/down counter 52. The output bit stream of a delta modulator is applied to the input terminal 54 and to the up/down counter 52 which counts the respective ones and zeros in the bit stream during any one predetermined interval, the clock for which is entered into an input terminal 56. Thus, the clock signal enters the bit stream into the counter 52 for one interval and at the end of each interval, counter 52 is sampled and the result is applied to a pattern generator 58 while the up/down counter 52 is initiated for the next interval.

Pattern generator 58 contains a simple memory containing rules for operating on the bit stream. As previously mentioned, if the circuitry of FIG. 5 is a high pass filter, then the pattern generator 58 is programmed to permit high slope values to pass unmodified but to lower mid and low slope values.

FIG. 6 illustrates typical response curves from the circuitry of FIG. 5 operating as a high pass filter. The delta modulated bit stream applied to input terminal 54 of FIG. 5 is illustrated as a 90.°. sector of a sine wave at a frequency of f1 in one instance and then a similar sine wave of equal amplitude at a frequency of f2, or twice that of f1. The pattern generator 58 was programmed to pass unmodified all slopes above a value of, for example, twelve, reduced slopes of ten to a value of eight, reduced slopes of eight to four, slopes of six to two, and change all slopes of four or less to zero. The results are plotted in FIG. 6.

In FIG. 6 the curve 60 represents an unfiltered delta modulated bit stream at a frequency of f2, twice that of the unfiltered bit stream at the frequency f1, as shown by the curve 62. After the pattern generator 58 has applied the above described rules to the bit stream in response to the slope data provided by the up/down counter 52, the filtered higher frequency response curve 64 is only slightly reduced in amplitude whereas the filtered lower frequency response curve 66 has been drastically reduced in amplitude.

FIG. 7 illustrates similar response curves of low pass filtering of the circuitry of FIG. 5 wherein the pattern generator 58 has been programmed to modify the same two input frequencies in accordance with low pass rules. Here bit stream intervals having slopes from zero to eight are passed unmodified, slopes of ten are changed to six, slopes of twelve are changed to two, and slopes greater than twelve become zero.

In FIG. 7 the response curve 70 represents the unfiltered bit stream at frequency f2, or twice that represented by the unfiltered bit stream curve 72. After pattern generator 58 has applied its low pass rules to the signal counted by the counter 52, the low frequency curve 76 is only slightly attenuated whereas the filtered higher frequency response curve 74 has been substantially eliminated, as illustrated.

In any waveform generated by delta modulating techniques the numbers of zeros and ones in the bit stream determine a net slope between beginning and end of a segment. If there are equal numbers of both zeros and ones, the net slope is obviously zero. Therefore, if the circuit were to count the ones and zeros and produce an output signal whenever their number became equal, this circuit would detect a zero crossover of the waveform. If the waveform were part of a period wave such as a sine wave, sawtooth wave, etc., the time required for each crossover signal would represent one-half the wave period so that doubling this value would indicate the total period length and hence the frequency of the periodic wave.

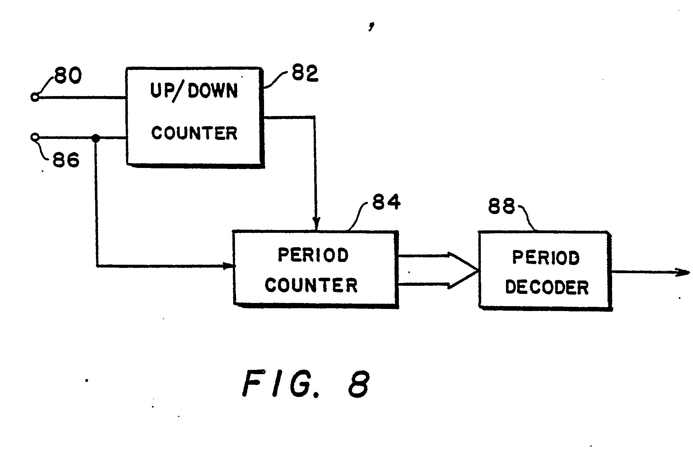

FIG. 8 is a block diagram of circuitry for frequency detection of delta modulated bit streams. In FIG. 8, the bit stream from a delta modulator is applied to the input terminal 80 and to the input of an up/down counter 82 which counts the ones and zeros in the bit stream and produces an output signal to a period counter 84 whenever the zero crossing is detected. An input clock signal is applied to the input terminal 86 and to the up/down counter 82 and period counter 84 so that the period counter may count the total elapsed interval between zero crossovers. If desired, the output of the period counter 84 may be applied to a period decoder 88 which performs the simple task of determining the elapsed time between two such crossover points and inverting to convert the time between crossover periods into a value representing frequency of the input bit stream.

CLAIMS

1.  A linear delta modulator comprising means for converting an analog input signal into a binary bit stream of a plurality of clocked pulses of equal widths and amplitudes but phased to represent binary one and zero pulses with the average of said bit stream substantially corresponding to said analog input signal, characterized by filter circuitry comprising:

pulse counting means (52) coupled to the output (54) of the converting means and responsive to the clock signals (50) applied to said converting means for counting the number of binary one and zero pulses occurring in the output signal of said converting means during a predetermined interval of a fixed number of pulses and for generating an output indicative of the difference in quantity of said one and zero pulses, said difference representing a waveform slope for said predetermined interval; and

signal modifying means (58) coupled to said pulse counting means (52) and responsive to the output therefrom and to said clock signals for altering the output bit stream by a predetermined amount whenever said waveform slope-representing one and zero pulses exceed a predetermined number during said predetermined interval.

2.  The linear delta modulator of Claim 1 characterized in that said pulse counting means is an up/down counter producing, at the end of each of said predetermined intervals, an output signal corresponding to the slope value of the binary output waveform of said converting means.

3. The linear delta modulator of Claim 2 characterized in that said filter circuitry is a high pass filter and said signal modifying means is a pattern generator having a memory programmed to pass unmodified said output bit stream having slope values higher than said predetermined number and to further reduce those of said slope values that are lower than said predetermined number.

4. The linear delta modulator of Claim 3 characterized in that said pattern generator increases the reduction of the slope values in said output bit stream as the slope value in the output signal of said up/down counter decreases.

5. The linear delta modulator of Claim 2 characterized in that said filter circuitry is a low pass filter and said signal modifying means is a pattern generator having a memory programmed to pass unmodified said bit stream having slope values lower than said predetermined number and to reduce those of said slope values that are higher than said predetermined number.

6. The linear delta modulator of Claim 5 characterized in that said pattern generator increases the reduction of the slope values in said output bit stream as the slope value in the output signal of said up/down counter increases.

7. A linear delta modulator comprising means for converting an analog input signal into a binary bit stream of a plurality of clocked pulses of equal widths and amplitudes but phased to represent binary one and zero pulses with the average of said bit stream substantially corresponding to said analog input signal, characterized by a frequency detector including:

an up/down counter (82) coupled to the output (80) of said converting means and responsive to the clock signals (86) applied to said converting means for generating an output signal at the point when the number of binary one pulses and zero pulses in the output bit stream from said modulator become equal, said point being a zero crossover point in the output of said converting means.

8. The linear delta modulator of Claim 7 characterized by further including a period counter (84) coupled to said up/down counter (82) and responsive to the output signals therefrom for determining the elapsed time between consecutive crossover points in said output signal of said converting means.

9. The linear delta modulator of Claim 8 characterized by further including period decoder circuitry (88) coupled to the output of said period counter (84) for converting said elapsed time into an output signal representing frequency.

0085625

FIG. 1
PRIOR ART

FIG. 2
PRIOR ART

FIG. 2A

FIG. 2B

0110110101 10

FIG. 2C

001010001000

2/4

0085625

FIG. 3

FIG. 4

FIG. 4A

FIG. 4B

FIG. 5

FIG. 6

FIG. 7

0085625

FIG. 8